# EUROPEAN PATENT SPECIFICATION

(11) **EP 2 925 012 B1**
(45) Date of publication and mention of the grant of the patent: **11.01.2017**
(21) Application number: 14305443.5
(22) Date of filing: 27.03.2014
(51) Int. Cl.: H04J 14/02

(54) **A wavelength routing cross-connect**
Wellenlängen-Routing-Kreuzverbindung
Connexion croisée à routage de longueur d'onde

(43) Date of publication of application: 30.09.2015
(73) Proprietor: ALCATEL LUCENT, 92100 Boulogne-Billancourt (FR)
(72) Inventor: Zami, Thierry, 91620 Nozay (FR)
(74) Representative: Berthier, Karine

(56) References cited:
- WO-A1-97/18685
- US-A1- 2005 018 965
- US-A1- 2005 207 756
- US-B1- 6 297 895
- PETER OHLEN: "Noise and Crosstalk Limitations in Optical Cross-Connects with Reshaping Wavelength Converters", JOURNAL OF LIGHTWAVE TECHNOLOGY, IEEE SERVICE CENTER, NEW YORK, NY, US, vol. 17, no. 8, 1 August 1999 (1999-08-01) , XP011029488, ISSN: 0733-8724

## Description

### Field of the invention

The invention relates to the technical field of optical communication systems, in particular to wavelength routing cross-connects for optical switching nodes.

### Background

Transparent mesh networks are networks with optical bypass of intermediate nodes whenever possible, and no regenerators whenever possible.

Wavelength Division Multiplexed WDM signals are used in optical networks in order to transmit simultaneously a plurality of optical signals modulated on a plurality of wavelength channels through a unique optical fiber.

Some filterless network architectures have been proposed in G. Mantelet et al., "PCE-Based Centralized Control Plane for Filterless Networks", IEEE Communications Magazine, Page 128, May 2013.

WO 97/18685 shows the use of wavelength converters to avoid wavelength contention.

### Summary

In an embodiment, the invention provides a wavelength routing cross-connect comprising:
a first input section connectable to a first input fiber for receiving a first WDM input signal comprising a plurality of wavelength channels and a first input Wavelength Blocker having an input connected to the first input section for receiving the first WDM optical signal, the first wavelength blocker being configured to selectively block or pass each wavelength channel of the first WDM optical signal in order to select a subset of the wavelength channels of the first WDM optical signal as a function of a configuration state,
a second input section connectable to a second input fiber for receiving a second WDM input signal comprising a plurality of wavelength channels and a second input Wavelength Blocker having an input connected to the second input section for receiving the second WDM optical signal, the second wavelength blocker being configured to selectively block or pass each wavelength channel of the second WDM optical signal in order to select a subset of the wavelength channels of the second WDM optical signal as a function of a configuration state,
a star coupler having a plurality of inputs connected to the respective input wavelength blockers for receiving the subsets of wavelength channels of each WDM input signal selected by the respective input Wavelength Blockers, the star coupler comprising optical paths to transparently pass a combination of the selected subsets of wavelength channels of the first and the second WDM optical signals to a plurality of star coupler outputs,
a first output section connectable to a first output fiber,
a second output section connectable to a second output fiber,
a first output Wavelength Blocker arranged between a first star coupler output and the first output section and configured to selectively block or pass each wavelength channel of the combination of the subsets of wavelength channels of the first and second WDM optical signals as a function of a configuration state, and
a second output Wavelength Blocker arranged between a second star coupler output and the second output section, and configured to selectively block or pass each wavelength channel of the combination of the subsets of wavelength channels of the first and second WDM optical signals as a function of a configuration state.

According to embodiments, such a wavelength routing cross-connect can comprise one or more of the features below.

In an embodiment, the wavelength routing cross-connect further comprises a drop module that comprises a plurality of optical receivers for demodulating at least a subset of the wavelength channels of the first or second WDM optical signal, wherein the drop module further comprises an optical splitter disposed upstream of the star coupler to split the first or second input WDM signal into two optical paths, the first optical path being connected directly or indirectly to the star coupler and the second optical path being connected to the drop module.

In embodiments the wavelength routing cross-connect comprises an optical demultiplexer comprising a demultiplexer input port for receiving the WDM optical signal and demultiplexer output ports to transmit the plurality of wavelength channels to a plurality of optical receivers, wherein the demultiplexer input port is connected to the optical splitter and the demultiplexer output ports are connected to the plurality of optical receivers.

In embodiments the first or second input wavelength blocker is arranged upstream of the optical splitter of the drop module.

In embodiments the first or second input wavelength blocker is arranged downstream of the optical splitter of the drop module.

In embodiments, the wavelength routing cross-connect further comprises an add module that comprises an optical transmitter for generating an added optical signal on a wavelength channel and an optical combiner arranged downstream of a star coupler output in order to combine the added optical signal with the combination of the subsets of wavelength channels of the first and second WDM optical signals, wherein the optical combiner is connected directly or indirectly to both the star coupler and the optical transmitter.

In embodiments the add module comprises an optical multiplexer comprising multiplexer input ports for multiplexing the plurality of wavelength channels from a plurality of optical transmitters into the WDM optical signal in a multiplexer output port, wherein the multiplexer output port is connected to the optical combiner and the multiplexer input ports are connected to the plurality of optical transmitters.

In embodiments the first or second output wavelength blocker is arranged downstream of the optical combiner of the add module.

In embodiments the first or second output wavelength blocker is arranged upstream of the optical combiner of the add module.

In embodiments the wavelength channel of the added optical signal does not overlap in the optical frequency space the combination of the subsets of wavelength channels of the first and second WDM optical signals.

In embodiments the output wavelength blocker is configured to block or pass each wavelength channel of the combination of the subsets of wavelength channels of the first and second WDM optical signals so as that the wavelength channel of the added optical signal is not overlapped in the optical frequency space.

In embodiments the Wavelength Blocker is a Channel Power Equalizer adapted to attenuate each wavelength channel by a configurable attenuation coefficient.

In embodiments the Wavelength Blocker comprises a wavelength demultiplexer, a plurality of wavelength channel paths, a plurality of variable optical attenuators on each wavelength channel path and a wavelength multiplexer, wherein each variable wavelength channel path connects an output of the wavelength demultiplexer and an input of the wavelength multiplexer.

In embodiments the first and second input Wavelength Blockers are configured in order that the respective selected subset of wavelength channels of the first and respectively second WDM optical signals are non-overlapping in optical frequency space.

In an embodiment, the invention provides an optical communication network comprising a wavelength routing cross-connect

Aspects of the invention are based on the idea of using a star coupler as a transit part of a wavelength routing cross-connect.

Aspects of the invention are based on the idea of limiting the losses due to filtering in an optical network.

Aspects of the invention are based on the idea of proposing a WDM network of which optical nodes broadcast and combine optical signals, with Channel Power Equalizers or Wavelength Blockers along the WDM transmission links that carry out channel blocking.

Aspects of the invention stem for the observation that a WDM layer without any filtering functionality is not desirable because the filtering functions also come with very useful functionalities such as wavelength blocking and channel power adjustment.

Aspects of the invention stem for the observation that a wavelength channel cannot be used to add a signal if the wavelength has not been made available upstream for instance by a Wavelength Blocker.

### Brief description of the drawings

These and other aspects of the invention will be apparent from and elucidated with reference to the embodiments described hereinafter, by way of example, with reference to the drawings.
Figure 1 is a functional representation of a first embodiment of a wavelength routing cross-connect.
Figure 2 is a functional representation of a second embodiment of a wavelength routing cross-connect.
Figure 3 is a functional representation of a third embodiment of a wavelength routing cross-connect.
Figure 4 is a functional representation of an example of Wavelength Blocker.
Figure 5 is a schematic representation of an optical meshed network.

### Detailed description of the embodiments

In a meshed optical network for optical telecommunication, optical signals are routed from a source node to a destination node thanks to wavelength routing cross-connects arranged in nodes located between the source node and destination node. The source, destination and routing nodes are linked by optical fibers transparent to the optical signals. A wavelength routing cross-connect is a switch that enables signals in optical fibers or integrated optical circuits to be selectively switched from one optical node to another.

Wavelength routing cross-connects can optionally add and drop further optical signals in order to allow a user to send local optical traffic to a distant optical node of the network or to locally receive optical traffic from a distant optical node. Some embodiments of such a wavelength routing cross-connect will be further described with reference to the figures for structural considerations.

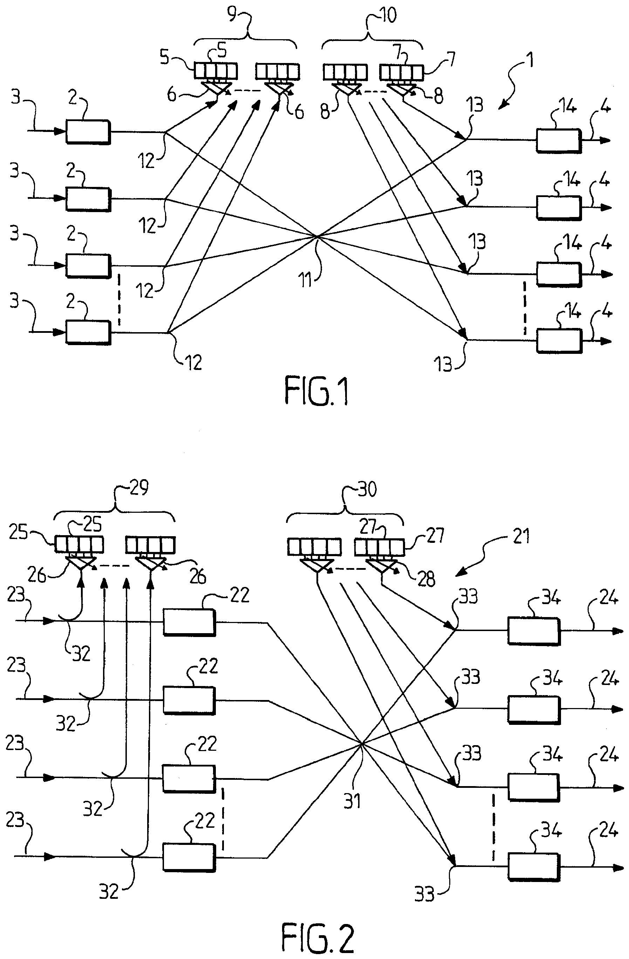

With reference to Figure 1, Figure 2 and Figure 3, three embodiments of a wavelength routing cross-connect are represented. The wavelength routing cross-connect includes a nXn star coupler as a transit part for transmitting and coupling optical signals from n wavelength routing cross-connect ingresses to n wavelength routing cross-connect egresses, where n denotes a positive integer number. A star coupler is a device that takes in a plurality of input signals, merges all of them and splits the merged signals into several identical output signals. As a consequence, a star coupler is a passive optical device, wherein an optical signal introduced into any input port is distributed to all output ports.

With reference to Figure 1, a first embodiment of a wavelength routing cross-connect 1 is represented in which a plurality of input WDM signals 3 is represented. Each WDM signal 3 includes a plurality of optical signals on a plurality of wavelength channels. The number of input WDM signals is denoted n.

The n input WDM signals 3 arrive, e.g. through optical fibers not shown, to the n ingresses of the optical switch device. From there they are transmitted to n egresses of the optical switch device and combined into n output WDM signals 4 through a transit part made of one nXn star coupler. Each of the input WDM signal 3 is split by the nXn star coupler in the n star coupler outputs each containing the combination of each of the input WDM signals 3.

On the path of one of the input WDM signals 3, an input wavelength Blocker 2 has been represented. The input wavelength blocker (WB) is configured to selectively pass or block some of the wavelength channels of the input WDM signal 3. The n Wavelength Blockers are configured in order that the respective wavelength channels of the respective input WDM signals 3 that are selectively passed are not overlapping. In other words, each of the plurality of input Wavelength Blockers is configured to pass only wavelength channels that are disjoint from the set of wavelength channels that are passed by the other input Wavelength Blockers of the plurality of the input Wavelength Blockers. As a result, the selected optical signals of the plurality of input WDM signals 3 can be combined in an nXn star coupler 11. Namely, an optical signal on a wavelength channel of a first input WDM signal 3 cannot erase or interfere with an optical signal of a second input WDM signal 3 that would be supported by the same wavelength channel while combining in the star coupler 11.

A dropping stage 9 of the wavelength routing cross-connect 1 for dropping the input WDM signals has been represented. A 1X2 splitter 12 is placed on the optical path downstream of the input wavelength Blocker 2 and upstream of the star coupler 11. The 1X2 splitter 12 connects the channels passed by the WB 2 of the input WDM signals to the dropping stage 9. The dropping stage 9 includes optical receivers 5 able to demodulate the optical signal on the wavelength channels that are selected by a Wavelength Selective Switch WSS 6 and/or by tuning the wavelength of the local oscillator whenever the receiver achieves coherent detection.

An adding stage 10 of the wavelength routing cross-connect 1 has been represented upstream of the output wavelength Blocker 14 and downstream of the star coupler 11. The adding stage 10 is connected to the outputs of the star coupler 11 by a 2X1 combiner 13. The adding stage 10 comprises means for generating a WDM added optical signal and a WSS 8 for combining the wavelength channels of the WDM added optical signal. The 2X1 combiner 13 combines the added optical signal with the combination of the subsets of wavelength channels of the plurality of WDM optical signals that have been selected by the WB 2. The means for generating an added optical signal is a laser source, for instance a laser diode and the 2X1 combiner can be for instance an optical coupler. The configurable WSSs can be replaced in the wavelength routing cross-connect adding stage 9 and respectively dropping stage 10 by any passive optical wavelength multiplexer and respectively passive optical wavelength demultiplexer.

In embodiments, the adding stages and the dropping stages of such the wavelength routing cross-connect may comprise wavelength selective switches (WSSs). A WSS refers to a piece of equipment that may be used as a reconfigurable multiplexer or a reconfigurable demultiplexer. When it is acting as a multiplexer, a plurality of selectable ports serve as inputs, and a common port serves as an output. The wavelength selective switch comprises grating components capable of separating a WDM optical signal received at an input port into a plurality of beams corresponding to predefined non-overlapping spectral bands, and light steering means capable of steering independently the optical beam corresponding to a respective spectral band either towards the output or towards an absorber. Thereby, the spectral component of the incoming WDM signal belonging to a spectral band can be switched as a whole, i.e. either passed to the common output or blocked. The same function is achieved for each spectral band at each input. This piece of equipment thereby carries out a reconfigurable multiplexing function on spectral bands whose optical frequencies are aligned with one or more predetermined optical frequency grids. It makes it possible to pass, from each input to the common output, one spectral band, multiple spectral bands, or no spectral band, selected from among the signals received at the respective input. The switching or steering of beams within the WSS is produced by spatial light manipulation organs, such as micromirrors activated by MEMS micro-actuators or liquid crystal cells. In addition to selecting the spectral bands, these organs may be capable of adjusting the signal attenuation for each spectral band. In this manner, each WSS serves to both select the spectral bands that must be passed to a given output line and to adjust their output power band-by-band towards the corresponding output line. Similarly, when it is acting as a demultiplexer, as WSS, a common port serves as an input and a plurality of selectable ports serve as outputs. The width of the spectral bands switched by the WSSs depends on the design of the WSSs. Preferably, this width is selected to match a single wavelength channel of a standard ITU grid. Alternatively, this width is selected as a multiple of a standard ITU channel spacing, i.e. Nx100GHz, Nx50GHz or Nx25GHz, where N is an integer, e.g. N = 4, N=8 or other. Some advanced WSSs can also provide an adaptable filtering function with adjustable spectral width. This feature makes it possible to implement flexible optical frequency grids in the WDM network. A lot of other implementations of multiplexers, or demultiplexers and optionally wavelength tunable multiplexer/demultiplexer are available. In an embodiment, a spatial optical switching matrix is combined with fixed wavelength multiplexer or demultiplexer. With reference to Figure 2, a second embodiment of a wavelength routing cross-connect 21 is represented. The elements on Figure 2 that are identical or similar to elements of the wavelength routing cross-connect of the Figure 1 are indicated on Figure 2 by the same numerals as on Figure 1 augmented by 20 and are used for the same purpose as on Figure 1.

The elements of the wavelength routing cross-connect are n input ports for receiving n input WDM signals 23, n output ports for transmitting n output WDM signals 24, n input Wavelength Blockers 22, one nXn star coupler 31, n output Wavelength Blockers 34. The elementary parts of the dropping stage 29 (optical splitters 32, WSSs 26 and receivers 25) and adding stage 30 (optical combiners 33, WSSs 28 and receivers 27) are arranged in the same manner as on Figure 1, except that the input Wavelength Blockers 22 are arranged downstream of the optical splitters 32. The embodiment of a wavelength routing cross-connect described in Figure 2 allows blocking one given wavelength channel even after its extraction by the dropping stage. Hence channels at the same wavelength can be added and dropped in the same wavelength routing cross-connect whereas this is not possible with the setup of Figure 1.

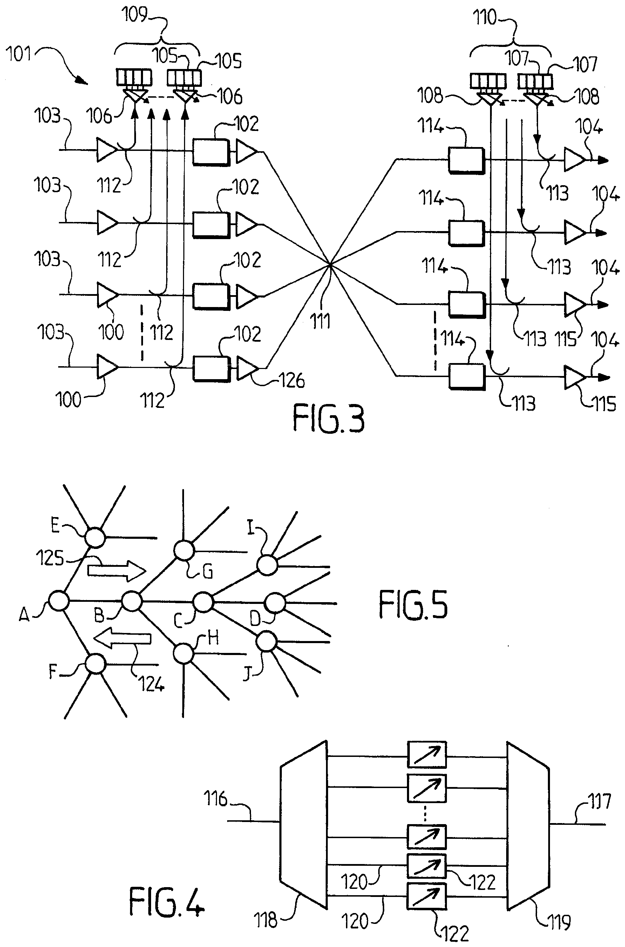

With reference to Figure 3, a third embodiment of a wavelength routing cross-connect 101 is represented. The elements of the wavelength routing cross-connect 101 are n input ports for receiving n input WDM signals 103, n output ports for transmitting n output WDM signals 104, n input Wavelength Blockers 102, one nXn star coupler 111, n output Wavelength Blockers 114. The elementary parts of the dropping stage 109 (optical splitters 112, WSSs 106 and receivers 105) and adding stage 110 (optical combiners 113, WSSs 108 and receivers 107) are arranged in the same manner as on Figure 2, except that the output Wavelength Blockers 114 are arranged upstream of the optical combiners 113.Optical amplifiers have been represented on Figure 3 on the paths of the WDM signals switched by the wavelength routing cross-connect at several positions that are, for the first positions 100, upstream of the optical splitters 112 and, for the second positions 126, downstream of the input wavelength blockers and upstream of the star coupler 111 and, for the third positions 115, downstream of the optical combiners 113. Although amplifiers have not been represented on Figure 1 and Figure 2, they can be added to the structures at any of the above positions in embodiments.

The adding stage 110 represented on Figure 3 is sketched so that the wavelength egress blocking by WB 114 arises before traffic insertion of the added optical signals. This arrangement provides one further degree of freedom to insert traffic at the same wavelength as any wavelength channel going through the transit part made of the nXn star coupler 111. By contrast this is not possible with the setups of Figures 1 and 2. Consequently the embodiment of Figure 3 reduces the wavelength blocking ratio. To limit the impact of the addition of the WBs 102 and the WBs 114 on the total insertion loss of the wavelength routing cross-connect, the WBs 102 are arranged at the inter stages of the preamplifiers or the booster amplifiers i.e. between the first position 100 and the second position 126 of the wavelength routing cross-connect and the WBs 114 are arranged upstream of the output amplifiers, i.e. upstream of the third position 115. This implies that the spontaneous emission (ASE) of the second stage of the pre-amplifiers (i.e. on the second position 126) recombines within the nxn star coupler 111. This is why the network designer should carefully investigate which WB placement is the least impacting on the basis of the arrangement of the Figure 3 in order to select the most appropriate one. The following possible placement choices are available: after the preamplifiers that are on the first positions 100 or, if any, inside the amplifiers inter-stage between the first position 100 and the second position 126 or upstream of the output amplifiers, i.e. upstream of the third position 115 and downstream of the star coupler 111.

The network designer should also carefully investigate which WB placement is the least impacting on the basis of the embodiments represented on the Figure 1, Figure 2 and Figure 3. The most advantageous embodiment of the three embodiments of the wavelength routing cross-connect is represented on Figure 3 and provides with a very flexible occupancy of the available wavelength channels. But Figures 1, 2 and 3 presents the feature of providing each input port and respectively each output port with a WB. In some cases, the WB of a specific port may not be needed. This is why the network designer may design each optical node by placing the WBs only in the input and/or output ports where it is necessary to block at least one wavelength channel for cost efficiency. Therefore in all the embodiments described above, when a WB appears to be useless with regard to the traffic demand matrix, the useless WB may be omitted.

The structures above described in Figure 1, Figure 2 and Figure 3 provide wavelength routing cross-connects for transparent meshed network that are very economical by limiting the number of Electrical/Optical/Electrical stages.

The different embodiments above described for implementing wavelength routing cross-connects both allow to switch optical traffic in meshed networks by transmitting to each of the outputs of the wavelength routing cross-connect the combination of wavelength channels that have been selected in a configurable manner from the plurality of wavelength channels received on each of the inputs of the wavelength routing cross-connect.

The selection of wavelength channels in a configurable manner is conducted thanks to a wavelength blocker (WB) as will be explained below.

With reference to Figure 4, an embodiment of a Wavelength Blocker is represented. A WDM optical input 116 passes a WDM optical signal that comprises a plurality of optical signals on a plurality of wavelength channels to an optical wavelength demultiplexer 118. The WDM optical signal is demultiplexed in the optical frequency space by the optical demultiplexer 118. The demultiplexer 118 is configured to filter the WDM optical signal in the optical frequency space and to let pass a respective wavelength channel by each demultiplexer output port. Hence, the demultiplexer 118 transmits each optical signal on each wavelength channel of the WDM optical signal to a disjoint optical path 120 linked to the demultiplexer outputs. A variable power attenuator 122 is arranged on each of the disjoint optical paths 120. The plurality of disjoint optical paths is associated to the plurality of the optical signals on the plurality of the wavelength channels. Hence, each optical signal on each wavelength channel can be variably attenuated and possibly extinguished on its path. The attenuation provided by variable optical attenuators 122 can be configured as a function of the wavelength. Each variable optical attenuator 122 is independently controlled by instructions thanks to an electrical programmable driver. The plurality of optical signals on the plurality of wavelength channels on the plurality of disjoint optical paths is then multiplexed at a wavelength multiplexer output 117 of a wavelength multiplexer 119. The multiplexing consists in combining the plurality of optical signals into a unique WDM output fiber.

In an embodiment, a plurality of WBs on a plurality of WDM optical inputs and/or WDM optical outputs can be integrated on a single chip. In an embodiment, the WB may be a Channel Power Equalizer (CPE).

In embodiments, the WB employs wavelength switching components that can be made of MEMs or LCoS (liquid crystals on silicon).

With reference to Figure 5, a meshed optical network is represented in which ten optical nodes are denoted by letters A to J and in which the optical fiber connections between two nodes are represented by solid lines. For instance, node C is connected with node B upstream and with nodes I, D and J downstream. For example, the optical fibers between two consecutive nodes are connected to ingresses (3, 23 or 103) and egresses (4, 24 or 104) of the wavelength routing cross-connects represented on Figure 1, 2 or 3 so as to provide bidirectional communication between each pair of adjacent nodes. For the sake of illustration a bidirectional connection is established on a wavelength channel λ₀ from node A to node C. If the Wavelength Blockers (WBs) of the meshed optical network are configured to let wavelength channel λ₀ pass, such connection would also occupy the wavelength λ₀ on all the optical fibers represented on the network and in both directions (go 125 and return 124) as the connections are bidirectional. By contrast, the above issue that a wavelength channel λ₀ becomes unavailable throughout the network can be solved by proper configuration of the WBs.

Wavelength blockers can be configured to block any wavelength channel, so as to make spectral slots available for the insertion of wavelength channels in the downstream nodes C, H and G. In other words, a wavelength channel is only passed to optical links that it is intended to reach.

With the wavelength routing cross-connect 1 of Figure 1 employed at node B, the channel λ₀ can be blocked on the links BG, BH, CI, CD, and CJ. Therefore, nodes G, I, D, J, and H can simultaneously handle channels at λ₀. That means that the set of nodes G, I, D, J, and H can simultaneously pass optical traffic containing different information for different optical demand from different sources to different destination, but modulated on the same wavelength λ₀. However the node B or C still cannot insert new signals on the wavelength channel λ₀.

With the wavelength routing cross-connect 21 as described with reference to Figure 2 employed at node B, additionally to the benefits of the setup of Figure 1, an optical signal at the wavelength λ₀ can be inserted in node C. Namely node C drops the optical signal that occupies the wavelength channel at λ₀ upstream of the node C, and then blocks it upstream of the transit part of the wavelength routing cross-connect of node C.

With the wavelength routing cross-connect 101 as described with reference to Figure 3, in addition to the benefits of the setup of the second embodiment, the wavelength channel λ₀ can also be employed for inserting an optical signal in node B because the optical signals on the wavelength channels that are in transit are blocked by WBs 114 in the output directions that do not correspond to their intended destination. Therefore the dropping stage, the transit part made by the star coupler, and the adding stage operate with wavelength channels that can be selected independently.

The Wavelength Blockers (WB) of any of the above described embodiments of a wavelength routing cross-connect in node B may be additionally configured to limit the power divergence of the plurality of wavelength channels incoming in the wavelength routing cross-connect of node B, so as to allow an easier reception of the wavelength channel powers on the receivers (Rx) of the wavelength routing cross-connect of node C.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A wavelength routing cross-connect (1, 21, 101) comprising:
a first input section connectable to a first input fiber (3, 23, 103) for receiving a first WDM input signal comprising a plurality of wavelength channels and a first input Wavelength Blocker (2, 22, 102) having an input connected to the first input section for receiving the first WDM optical signal, the first wavelength blocker being configured to selectively block or pass each wavelength channel of the first WDM optical signal in order to select a subset of the wavelength channels of the first WDM optical signal as a function of a configuration state,
a second input section connectable to a second input fiber (3, 23, 103) for receiving a second WDM input signal comprising a plurality of wavelength channels and a second input Wavelength Blocker (2, 22, 102) having an input connected to the second input section for receiving the second WDM optical signal, the second wavelength blocker being configured to selectively block or pass each wavelength channel of the second WDM optical signal in order to select a subset of the wavelength channels of the second WDM optical signal as a function of a configuration state,
a star coupler (11, 31, 111) having a plurality of inputs connected to the respective input wavelength blockers for receiving the subsets of wavelength channels of each WDM input signal selected by the respective input Wavelength Blockers, the star coupler comprising optical paths to transparently pass a combination of the selected subsets of wavelength channels of the first and the second WDM optical signals to a plurality of star coupler outputs,
a first output section connectable to a first output fiber (4, 24, 104),
a second output section connectable to a second output fiber (4, 24, 104),
a first output Wavelength Blocker (14, 34, 114) arranged between a first star coupler output and the first output section and configured to selectively block or pass each wavelength channel of the combination of the subsets of wavelength channels of the first and second WDM optical signals as a function of a configuration state, and
a second output Wavelength Blocker (14, 34, 114) arranged between a second star coupler output and the second output section, and configured to selectively block or pass each wavelength channel of the combination of the subsets of wavelength channels of the first and second WDM optical signals as a function of a configuration state.

2. A wavelength routing cross-connect in accordance with claim 1, further comprising a drop module (9, 29, 109) that comprises a plurality of optical receivers (5, 25, 105) for demodulating at least a subset of the wavelength channels of the first or second WDM optical signal, wherein
the drop module further comprises an optical splitter (12, 32, 112) disposed upstream of the star coupler to split the first or second input WDM signal into two optical paths, the first optical path being connected directly or indirectly to the star coupler and the second optical path being connected to the drop module.

3. A wavelength routing cross-connect in accordance with claim 2, wherein the drop module comprises an optical demultiplexer (6, 26, 106) comprising a demultiplexer input port for receiving the WDM optical signal and demultiplexer output ports to transmit the plurality of wavelength channels to a plurality of optical receivers, wherein
the demultiplexer input port is connected to the optical splitter and the demultiplexer output ports are connected to the plurality of optical receivers.

4. A wavelength routing cross-connect (1) in accordance with any one of claims 2 to 3, wherein the first or second input wavelength blocker (2) is arranged upstream of the optical splitter of the drop module.

5. A wavelength routing cross-connect (21, 101) in accordance with any one of claims 2 to 3, wherein the first or second input wavelength blocker (22, 102) is arranged downstream of the optical splitter of the drop module.

6. A wavelength routing cross-connect in accordance with any one of claims 1 to 5, further comprising an add module (10, 30, 110) that comprises an optical transmitter (7, 27, 107) for generating an added optical signal on a wavelength channel and an optical combiner (13, 33, 113) arranged downstream of a star coupler output in order to combine the added optical signal with the combination of the subsets of wavelength channels of the first and second WDM optical signals, wherein the optical combiner is connected directly or indirectly to both the star coupler and the optical transmitter.

7. A wavelength routing cross-connect in accordance with claim 6, wherein the add module comprises an optical multiplexer (8, 28, 108) comprising multiplexer input ports for multiplexing the plurality of wavelength channels from a plurality of optical transmitter into the WDM optical signal in a multiplexer output port, wherein
the multiplexer output port is connected to the optical combiner and the multiplexer input ports are connected to the plurality of optical transmitters.

8. A wavelength routing cross-connect (1, 21) in accordance with claims 6 or 7, wherein the first or second output wavelength blocker (14, 34) is arranged downstream of the optical combiner of the add module.

9. A wavelength routing cross-connect (101) in accordance with claims 6 or 7, wherein the first or second output wavelength blocker (114) is arranged upstream of the optical combiner of the add module.

10. A wavelength routing cross-connect in accordance with claim 8, wherein the wavelength channel of the added optical signal does not overlap in the optical frequency space the combination of the subsets of wavelength channels of the first and second WDM optical signals.

11. A wavelength routing cross-connect in accordance with claim 9, wherein the output wavelength blocker is configured to block or pass each wavelength channel of the combination of the subsets of wavelength channels of the first and second WDM optical signals so as that the wavelength channel of the added optical signal is not overlapped in the optical frequency space.

12. A wavelength routing cross-connect in accordance with any one of claims 1 to 11, wherein the Wavelength Blocker is a Channel Power Equalizer adapted to attenuate each wavelength channel by a configurable attenuation coefficient.

13. A wavelength routing cross-connect in accordance with any one of claims 1 to 12, wherein the Wavelength Blocker comprises a wavelength demultiplexer, a plurality of wavelength channel paths, a plurality of variable optical attenuators on each wavelength channel path and a wavelength multiplexer, wherein each variable wavelength channel path connects an output of the wavelength demultiplexer and an input of the wavelength multiplexer.

14. A wavelength routing cross-connect in accordance with any one of claims 1 to 13, wherein the first and second input Wavelength Blockers are configured in order that the respective selected subset of wavelength channels of the first and respectively second WDM optical signals are non-overlapping in optical frequency space.

15. An optical communication network comprising a wavelength routing cross-connect in accordance with any one of claims 1 to 14.

## Patentansprüche

1. Wellenlängenrouting-Querverbindung (1, 21, 101), umfassend:
einen ersten Eingangsabschnitt, verbindbar mit einer ersten Eingangsfaser (3, 23, 103) für den Empfang eines ersten WDM-Eingangssignals und eine Vielzahl von Wellenlängenkanälen sowie einen ersten Eingangs-Wellenlängenblockierer (2, 22, 102) umfassend, von dem ein Eingang mit dem ersten Eingangsabschnitt verbunden ist, um das erste optische WDM-Signal zu empfangen, wobei der erste Wellenlängenblockierer konfiguriert ist für das selektive Blockieren oder Weitergeben eines jeden Wellenlängenkanals des ersten optischen WDM-Signals, um einen Untersatz von Wellenlängenkanälen des ersten optischen WDM-Signals als Funktion eines Konfigurationsstatus auszuwählen,
einen zweiten Eingangsabschnitt, verbindbar mit einer zweiten Eingangsfaser (3, 23, 103) für den Empfang eines zweiten WDM-Eingangssignals und eine Vielzahl von Wellenlängenkanälen sowie einen ersten Eingangs-Wellenlängenblockierer (2, 22, 102) umfassend, von dem ein Eingang mit dem zweiten Eingangsabschnitt verbunden ist, um das zweite optische WDM-Signal zu empfangen, wobei der zweite Wellenlängenblockierer konfiguriert ist für das selektive Blockieren oder Weitergeben eines jeden Wellenlängenkanals des zweiten optischen WDM-Signals, um einen Untersatz von Wellenlängenkanälen des zweiten optischen WDM-Signals als Funktion eines Konfigurationsstatus auszuwählen,
einen Sternkoppler (11, 31, 111) mit einer Vielzahl von mit den entsprechenden Wellenlängenblockierern verbundenen Eingängen für den Empfang des Untersatzes von Wellenlängenkanälen eines jeden vom entsprechenden Eingangs-Wellenlängenblockierer ausgewählten WDM-Eingangssignals, wobei der Sternkoppler optische Pfade für das transparente Weiterleiten einer Kombination der ausgewählten Untersätze von Wellenlängenkanälen des ersten und des zweiten optischen WDM-Signals an eine Vielzahl von Sternkopplerausgängen umfasst,
einen ersten Ausgangsabschnitt, verbindbar mit einer ersten Ausgangsfaser (4, 24, 104),
einen zweiten Ausgangsabschnitt, verbindbar mit einer zweiten Ausgangsfaser (4, 24, 104),
einen ersten Ausgangs-Wellenlängenblockierer (14, 34, 114), der angeordnet ist zwischen einem ersten Sternkoppler-Ausgang und dem ersten Ausgangsabschnitt, und der konfiguriert ist für das selektive Blockieren oder Weiterleiten eines jeden Wellenlängenkanals der Kombination von Untersätzen von Wellenlängenkanälen des ersten und des zweiten optischen WDM-Signals in Funktion eines konfigurierten Zustands, und
einen zweiten Ausgangs-Wellenlängenblockierer (14, 34, 114), der angeordnet ist zwischen einem zweiten Sternkoppler-Ausgang und dem zweiten Ausgangsabschnitt, und der konfiguriert ist für das selektive Blockieren oder Weiterleiten eines jeden Wellenlängenkanals der Kombination von Untersätzen von Wellenlängenkanälen des ersten und des zweiten optischen WDM-Signals in Funktion eines konfigurierten Zustands.

2. Wellenlängenrouting-Querverbindung nach Anspruch 1, weiterhin ein Drop-Modul (9, 29, 109) umfassend, welches eine Vielzahl optischer Empfänger (5, 25, 105) für das Demodulieren mindestens eines Untersatzes von Wellenlängenkanälen des ersten oder zweiten optischen WDM-Signals umfasst, wobei
das Drop-Modul weiterhin einen dem Sternkoppler vorgelagerten, optischen Splitter (12, 32, 112) umfasst, um das erste oder das zweite WDM-Eingangssignal in zwei optische Pfade zu splitten, wobei der erste optische Pfad direkt oder indirekt mit dem Sternkoppler und der zweite optische Pfad mit dem Drop-Modul verbunden wird.

3. Wellenlängenrouting-Querverbindung nach Anspruch 2, wobei das Drop-Modul einen optischen Demultiplexer (6, 26, 106) umfasst, der einen Demultiplexer-Eingangsport für den Empfang des optischen WDM-Signals und Demultiplexer-Ausgangsports für das Übermitteln der Vielzahl von Wellenlängenkanälen an eine Vielzahl von optischen Empfängern umfasst, wobei
der Demultiplexer-Eingangsport mit dem optischen Splitter verbunden ist und die Demultiplexer-Ausgangsports mit der Vielzahl optischer Empfänger verbunden sind.

4. Wellenlängenrouting-Querverbindung (1) nach einem jeglichen der Ansprüche 2 bis 3, wobei der erste oder der zweite Eingangs-Wellenlängenblockierer (2) dem optischen Splitter des Drop-Moduls vorgelagert ist.

5. Wellenlängenrouting-Querverbindung (21, 101) nach einem jeglichen der Ansprüche 2 bis 3, wobei der erste oder der zweite Eingangs-Wellenlängenblockierer (22, 102) dem optischen Splitter des Drop-Moduls nachgelagert ist.

6. Welfenlängenrouting-Querverbindung nach einem jeglichen der Ansprüche 1 bis 5, weiterhin ein Add-Modul (10, 30, 110) umfassend, welches einen optischen Sender (7, 27, 107) für das Generieren eines zusätzlichen optischen Signals auf einem Wellenlängenkanal und einen optischen Kombinator (13, 33, 113) umfasst, der einem Sternkoppler-Ausgang nachgelagert ist, um das zusätzliche optische Signal mit der Kombination des Untersatzes von Wellenlängenkanälen des ersten und des zweiten optischen WDM-Signals zu kombinieren, wobei der optische Kombinator direkt oder indirekt sowohl mit dem Sternkoppler als auch mit dem optischen Sender verbunden ist.

7. Wellenlängenrouting-Querverbindung nach Anspruch 6, wobei das Add-Modul einen optischen Multiplexer (8, 28, 108) umfasst, welcher Multiplexer-Eingangsports für das Multiplexen der Vielzahl von Wellenlängenkanälen von einer Vielzahl optischer Sender in das optische WDM-Eingangssignal in einem Multiplexer-Ausgangsport umfasst, wobei
der Multiplexer-Ausgangsport mit dem optischen Kombinator verbunden ist und die Multiplexer-Eingangsports mit der Vielzahl optischer Sender verbunden sind.

8. Wellenlängenrouting-Querverbindung (1, 21) nach Anspruch 6 oder 7, wobei der erste oder der zweite Ausgangs-Wellenlängenblockierer (14, 34) dem optischen Kombinator des Add-Moduls nachgelagert ist.

9. Wellenlängenrouting-Querverbindung (101) nach Anspruch 6 oder 7, wobei der erste oder der zweite Ausgangs-Wellenlängenblockierer (114) dem optischen Kombinator des Add-Moduls vorgelagert ist.

10. Wellenlängenrouting-Querverbindung nach Anspruch 8, wobei der Wellenlängenkanal des zusätzlichen optischen Signals in dem optischen Frequenzbereich nicht die Kombination der Untersätze von Wellenlängenkanälen des ersten und des zweiten optischen WDM-Signals überlappt.

11. Wellenlängenrouting-Querverbindung nach Anspruch 9, wobei der Ausgangs-Wellenlängenblockierer konfiguriert ist für das Blockieren oder Weiterleiten eines jeden Wellenlängenkanals der Kombination der Untersätze von Wellenlängenkanälen des ersten und des zweiten optischen WDM-Signals, dergestalt dass der Wellenlängenkanal des zusätzlichen optischen Signals im optischen Frequenzbereich nicht überlappt wird.

12. Wellenlängenrouting-Querverbindung nach einem jeglichen der Ansprüche 1 bis 11, wobei der Wellenlängenblockierer ein Kanalleistungsausrichter ist, der ausgelegt ist für das Dämpfen eines jeden Wellenlängenkanals um einen konfigurierbaren Dämpfungskoeffizienten.

13. Wellenlängenrouting-Querverbindung nach einem jeglichen der Ansprüche 1 bis 12, wobei der Wellenlängenblockierer einen Wellenlängendemultiplexer, eine Vielzahl von Wellenlängenkanalpfaden, eine Vielzahl variabler optischer Dämpfer auf jedem Welfenlängenkanalpfad und einen Wellenlängenmultiplexer umfasst, wobei jeder variable Wellenlängenkanal einen Ausgang des Wellenlängendemultiplexers mit einem Eingang des Wellenlängenmultiplexers verbindet.

14. Wellenlängenrouting-Querverbindung nach einem jeglichen der Ansprüche 1 bis 13, wobei der erste und der zweite Eingangs-Wellenlängenblockierer so konfiguriert sind, dass sich der entsprechende Untersatz von Wellenlängenkanälen des ersten und respektive des zweiten optischen WDM-Signals im optischen Frequenzbereich nicht überlappen.

15. Ein optisches Kommunikationsnetzwerk, eine Wellenlängenrouting-Querverbindung nach einem jeglichen der Ansprüche 1 bis 14 umfassend.

## Revendications

1. Brasseur de routage en longueur d'onde (1, 21, 101) comprenant :
une première partie d'entrée pouvant être connectée à une première fibre d'entrée (3, 23, 103) pour recevoir un premier signal d'entrée WDM comprenant une pluralité de canaux de longueur d'onde et un premier bloqueur de longueur d'onde d'entrée (2, 22, 102) dont une entrée est connectée à la première partie d'entrée pour recevoir le premier signal optique WDM, le premier bloqueur de longueur d'onde étant configuré pour bloquer ou laisser passer sélectivement chaque canal de longueur d'onde du premier signal optique WDM afin de sélectionner un sous-ensemble des canaux de longueur d'onde du premier signal optique WDM en fonction d'un état de configuration,
une deuxième partie d'entrée pouvant être connectée à une deuxième fibre d'entrée (3, 23, 103) pour recevoir un deuxième signal d'entrée WDM comprenant une pluralité de canaux de longueur d'onde et un deuxième bloqueur de longueur d'onde d'entrée (2, 22, 102) dont une entrée est connectée à la deuxième partie d'entrée pour recevoir le deuxième signal optique WDM, le deuxième bloqueur de longueur d'onde étant configuré pour bloquer ou laisser passer sélectivement chaque canal de longueur d'onde du deuxième signal optique WDM afin de sélectionner un sous-ensemble des canaux de longueur d'onde du deuxième signal optique WDM en fonction d'un état de configuration,
un coupleur en étoile (11, 31, 111) ayant une pluralité d'entrées connectées aux bloqueurs de longueur d'onde d'entrée correspondants pour recevoir les sous-ensembles de canaux de longueur d'onde de chaque signal d'entrée WDM sélectionné par les bloqueurs de longueur d'onde d'entrée correspondants, le coupleur en étoile comprenant des chemins optiques pour transmettre de façon transparente une combinaison des sous-ensembles de canaux de longueur d'onde sélectionnés du premier et du deuxième signaux optiques à une pluralité de sorties de coupleur en étoile,
une première partie de sortie pouvant être connectée à une première fibre de sortie (4, 24, 104),
une deuxième partie de sortie pouvant être connectée à une deuxième fibre de sortie (4, 24, 104),
un premier bloqueur de longueur d'onde de sortie (14, 34, 114) disposé entre une première sortie de coupleur en étoile et la première partie de sortie et configuré pour bloquer ou laisser passer sélectivement chaque canal de longueur d'onde de la combinaison des sous-ensembles de canaux de longueur d'onde des premier et deuxième signaux optiques WDM en fonction d'un état de configuration, et
un deuxième bloqueur de longueur d'onde de sortie (14, 34, 114) disposé entre une deuxième sortie de coupleur en étoile et la deuxième partie de sortie et configuré pour bloquer ou laisser passer sélectivement chaque canal de longueur d'onde de la combinaison des sous-ensembles de canaux de longueur d'onde des premier et deuxième signaux optiques WDM en fonction d'un état de configuration.

2. Brasseur de routage en longueur d'onde selon la revendication 1, comprenant en outre un module d'extraction (9, 29, 109) qui contient une pluralité de récepteurs optiques (5, 25, 105) pour démoduler au moins un sous-ensemble des canaux de longueur d'onde du premier ou du deuxième signal optique WDM., dans lequel
le module d'extraction contient en outre un diviseur optique (12, 32, 112) disposé en amont du coupleur en étoile pour diviser le premier ou le deuxième signal WDM d'entrée en deux chemins optiques, le premier chemin optique étant connecté directement ou indirectement au coupleur en étoile et le deuxième chemin optique étant connecté au module d'extraction.

3. Brasseur de routage en longueur d'onde selon la revendication 2, dans lequel le module d'extraction comprend un démultiplexeur optique (6, 26, 106) contenant un port d'entrée de démultiplexeur pour recevoir le signal optique WDM et des ports de sortie de démultiplexeur pour transmettre la pluralité de canaux de longueur d'onde à une pluralité de récepteurs optiques, dans lequel
le port d'entrée du démultiplexeur est connecté au diviseur optique et les ports de sortie du démultiplexeur sont connectés à la pluralité de récepteurs optiques.

4. Brasseur de routage en longueur d'onde (1) selon l'une quelconque des revendications 2 à 3, dans lequel le premier ou le deuxième bloqueur de longueur d'onde d'entrée (2) est disposé en amont du diviseur optique du module d'extraction.

5. Brasseur de routage en longueur d'onde (21, 101) selon l'une quelconque des revendications 2 à 3, dans lequel le premier ou le deuxième bloqueur de longueur d'onde d'entrée (22, 102) est disposé en aval du diviseur optique du module d'extraction.

6. Brasseur de routage en longueur d'onde selon l'une quelconque des revendications 1 à 5, comprenant en outre un module d'insertion (10, 30, 110) qui contient un émetteur optique (7, 27, 107) pour générer un signal optique inséré sur un canal de longueur d'onde et un mélangeur optique (13, 33, 113) disposé en aval d'une sortie de coupleur en étoile afin de combiner le signal optique inséré avec la combinaison des sous-ensembles de canaux de longueur d'onde des premier et deuxième signaux optiques WDM, dans lequel le mélangeur optique est connecté directement ou indirectement à la fois au coupleur en étoile et à l'émetteur optique.

7. Brasseur de routage en longueur d'onde selon la revendication 6, dans lequel le module d'insertion comprend un multiplexeur optique (8, 28, 108) contenant des ports d'entrée de multiplexeur pour multiplexer la pluralité de canaux de longueur d'onde provenant d'une pluralité de transmetteurs optiques pour former le signal optique WDM sur un port de sortie de multiplexeur, dans lequel
le port de sortie du multiplexeur est connecté au mélangeur optique et les ports d'entrée du multiplexeur sont connectés à la pluralité d'émetteurs optiques.

8. Brasseur de routage en longueur d'onde (1, 21) selon les revendications 6 ou 7, dans lequel le premier ou le deuxième bloqueur de longueur d'onde de sortie (14, 34) est disposé en aval du mélangeur optique du module d'insertion.

9. Brasseur de routage en longueur d'onde (101) selon les revendications 6 ou 7, dans lequel le premier ou le deuxième bloqueur de longueur d'onde de sortie (114) est disposé en amont du mélangeur optique du module d'insertion.

10. Brasseur de routage en longueur d'onde selon la revendication 8, dans lequel le canal de longueur d'onde du signal inséré ne chevauche pas dans l'espace de fréquence optique la combinaison des sous-ensembles de canaux de longueur d'onde des premier et deuxième signaux optiques WDM.

11. Brasseur de routage en longueur d'onde selon la revendication 9, dans lequel le bloqueur de longueur d'onde de sortie est configuré pour bloquer ou laisser passer chaque canal de longueur d'onde de la combinaison des sous-ensembles de canaux de longueur d'onde des premier et deuxième signaux optiques WDM de sorte qu'il n'y ait pas de chevauchement du canal de longueur d'onde du signal optique inséré dans l'espace de fréquence optique.

12. Brasseur de routage en longueur d'onde selon l'une quelconque des revendications 1 à 11, dans lequel le bloqueur de longueur d'onde est un égaliseur de puissance de canal adapté pour atténuer chaque canal de longueur d'onde selon un coefficient d'atténuation configurable.

13. Brasseur de routage en longueur d'onde selon l'une quelconque des revendications 1 à 12, dans lequel le bloqueur de longueur d'onde comprend un démultiplexeur de longueur d'onde, une pluralité de chemins de canal de longueur d'onde, une pluralité d'atténuateurs optiques variables sur chaque chemin de canal de longueur d'onde et un multiplexeur de longueur d'onde, dans lequel chaque chemin de canal de longueur d'onde variable connecte une sortie du démultiplexeur de longueur d'onde et une entrée du multiplexeur de longueur d'onde.

14. Brasseur de routage en longueur d'onde selon l'une quelconque des revendications 1 à 13, dans lequel les premier et deuxième bloqueurs de longueur d'onde d'entrée sont configurés afin que les sous-ensembles sélectionnés correspondants de canaux de longueur d'onde des premier et respectivement deuxième signaux optiques WDM ne se chevauchent pas dans un espace de fréquence optique.

15. Réseau de communication optique comprenant un brasseur de routage en longueur d'onde selon l'une quelconque des revendications 1 à 14.
